(19) Europäisches Patentamt
European Patent Office
Office européen des brevets

(11) EP 1 367 666 A1

(12) EUROPEAN PATENT APPLICATION
published in accordance with Art. 158(3) EPC

(43) Date of publication:
03.12.2003 Bulletin 2003/49

(21) Application number: 02705069.9

(22) Date of filing: 04.03.2002

(51) Int Cl.7: H01M 10/30, H01M 4/52

(86) International application number:
PCT/JP02/01948

(87) International publication number:
WO 02/071527 (12.09.2002 Gazette 2002/37)

(84) Designated Contracting States:
AT BE CH CY DE DK ES FI FR GB GR IE IT LI LU MC NL PT SE TR

(30) Priority: 05.03.2001 JP 2001059638

(71) Applicant: Yuasa Corporation
Takatsuki-shi, Osaka 569-1115 (JP)

(72) Inventors:
- FURUKAWA, Kengo
Takatsuki-shi, Osaka 569-1115 (JP)
- KANEMOTO, Manabu
Takatsuki-shi, Osaka 569-1115 (JP)
- KUZUHARA, Minoru
Takatsuki-shi, Osaka 569-1115 (JP)
- WATADA, Masaharu
Takatsuki-shi, Osaka 569-1115 (JP)
- OSHITANI, Masahiko
Takatsuki-shi, Osaka 569-1115 (JP)

(74) Representative: Sturt, Clifford Mark et al
Miller Sturt Kenyon
9 John Street
London WC1N 2ES (GB)

# (54) METHOD FOR MANUFACTURING NICKEL HYDROGEN BATTERY

(57) A subject for the invention is to provide a sealed nickel-hydrogen cell which has an increased capacity attained by reducing the initial generation of a negative-electrode discharge reserve and which has excellent discharge performance, e.g., high-rate discharge performance, and has high productivity.

The invention provides a process for producing a sealed nickel-hydrogen cell which has positive-electrode active material particles constituted of a core layer comprising, as the main component, nickel compounds including nickel oxyhydroxide and a surface layer covering the core layer and comprising a cobalt compound and further has hydrogen-absorbing alloy particles, the process comprising the step of oxidizing the core layer and the cobalt contained in the surface layer of the positive-electrode active material before cell assembling, the step of conducting a charge-discharge operation at least once after cell assembling, and the step of conducting aging after the charge-discharge operation.



Printed by Jouve, 75001 PARIS (FR)

## Description

<Technical Field>

The present invention relates to a process for producing a nickel-hydrogen cell (nickel metal hydride cell) having a positive electrode containing nickel hydroxide as the main component and a negative electrode comprising a hydrogen-absorbing alloy.

<Background Art>

Compared to nickel-cadmium cells, nickel-hydrogen cells have a high energy density and are less likely to cause environmental pollution because of the nonuse of cadmium. Nickel-hydrogen cells are hence extensively used as power sources for appliances such as portable telephones, power tools, and personal computers. With the progress of size and weight reduction and trend toward a larger number of functions in these appliances, the cells to be used as power sources therefor are simultaneously required to have a smaller size and a higher capacity.

Nickel-hydrogen cells are constituted of a positive electrode having a nickel hydroxide-based active material and a negative electrode having a hydrogen-absorbing alloy. Such nickel-hydrogen cells generally employ a pasted positive electrode. This positive electrode has a particulate nickel hydroxide-based active material and further has, on the surface of the particles, a cobalt compound, e.g., cobalt hydroxide, serving as a precursor for a conductive substance. During the initial charge of the cell, this cobalt compound changes into cobalt oxyhydroxide, which is conductive, to form a conductive network in the positive electrode.

Incidentally, the reaction yielding cobalt oxyhydroxide during initial charge is an irreversible reaction, and the cobalt oxyhydroxide once yielded never returns to the original cobalt compound. In the negative electrode, on the other hand, an excess capacity called a discharge reserve and not contributing to discharge accumulates during the initial charge in an amount corresponding to the irreversible reaction on the positive electrode.

When a nickel-hydrogen cell is overcharged, water molecules in the electrolyte decompose to evolve oxygen gas on the positive electrode. This oxygen gas evolution increases the internal pressure of the cell and is hence causative of electrolyte leakage, resulting in a shortened cell life. Nickel-hydrogen cells employ a mechanism in which the oxygen evolved on the positive electrode is absorbed by the negative electrode to thereby inhibit the internal pressure of the cell from increasing. Because of this, the negative electrode has been designed to additionally have a chargeable capacity, called a charge reserve, so as not to evolve hydrogen during overcharge.

Under these circumstances, in nickel-hydrogen cells, the negative electrode is regulated to have a capacity larger than the capacity of the positive electrode. Consequently, the capacity of a nickel-hydrogen cell is usually governed by the capacity of the positive electrode. This is called a positive-electrode governance system.

For the reasons described above, if the capacity of the positive electrode can be increased, then the capacity of the nickel-hydrogen cell can be improved. However, in order to increase the capacity of the positive electrode while keeping the packing volumes of the positive electrode and negative electrode unchanged, it is necessary to reduce the discharge reserve amount and the charge reserve amount.

Expedients for reducing the discharge reserve amount have hitherto been proposed. For example, Japanese Patent Laid-Open No. 152866/1988 proposes a technique in which the surface of active-material particles comprising nickel hydroxide as the main component is coated beforehand with a layer of cobalt hydroxide to thereby reduce the amount of the cobalt to be contained in the positive electrode. However, because the amount of the cobalt added to the positive electrode is as small as from 3 to 10 wt%, a significant effect has not been obtained in reducing the discharge reserve.

On the other hand, the hydrogen-absorbing alloy as a negative-electrode active material suffers surface oxidation upon contact with air during storage or transportation to form an oxide film. This oxide film lowers cell performance because it inhibits electron conduction and electrode reactions. For removing the film once formed, it has been necessary to repeatedly conduct about ten cycles of charge-discharge before cell assembling.

In case where a hydrogen-absorbing alloy negative electrode in the state of having the film is used to assemble a sealed cell, the negative electrode does not exhibit the designed performance and has a considerably reduced capacity, resulting in a disturbed balance between the negative-electrode capacity and the positive-electrode capacity. As a result, the electrolyte is electrolyzed to evolve a gas. Because of this, the internal pressure of the cell increases and the pressure release valve works to release hydrogen outward, leading to a decrease in discharge performance or to deterioration in cycle performance. There has hence been a desire for a hydrogen-absorbing alloy negative electrode having high activity even immediately after cell assembling.

A technique for eliminating the problem described above has been proposed in, e.g., Japanese Patent Laid-Open Nos. 88150/1994 and 29568/1995. This technique comprises immersing a negative-electrode active material comprising a hydrogen-absorbing alloy as the main component in a high-temperature alkali, weak acid, and aqueous hydrofluoric acid solution before cell assembling to thereby remove the film formed on the surface. This technique, however, is disadvantageous in that the step of high-temperature treatment poses a problem concerning safety and that since a hydroxide of a rare earth element generates as a by-product on the surface of the alloy after the treatment, it is necessary to clean the alloy to remove the hydroxide. Furthermore, the technique has a drawback that after the treatment, the alloy is apt to suffer surface alteration during storage to come to have reduced activity.

In general, sealed nickel-hydrogen cells are designed so that the negative electrode has a packing capacity larger than the packing capacity of the positive electrode while taking account of a charge reserve and discharge reserve. As charge and discharge are repeated, the discharge reserve increases and the charge reserve decreases due to the corrosion of the hydrogen-absorbing alloy and the decomposition of organic compounds, e.g., a binder, contained in the electrodes, in addition to the irreversible reaction on the positive electrode. As a result, the capacity balance between the negative electrode and the positive electrode is disturbed to reduce the capacity and the end of the life is finally reached. Consequently, there has been a desire for an expedient for inhibiting the charge reserve from decreasing (i.e., the discharge reserve from increasing).

An object of the invention, which has been achieved in view of the above-described problems of the related art, is to provide a process for producing a nickel-hydrogen cell which has an improved cell capacity and is inhibited from suffering an increase in cell inner pressure, by reducing the discharge reserve and inhibiting the charge reserve from decreasing.

<Disclosure of the Invention>

The invention provides a process for producing a nickel-hydrogen cell, characterized by assembling a nickel-hydrogen storage cell having a positive-electrode active material comprising a core layer comprising, as the main component, nickel compounds including nickel oxyhydroxide and a surface layer covering the surface layer and comprising as the main component a compound of cobalt having an oxidation number larger than 2, subsequently conducting a charge-discharge cycle at least once, and then aging the assembly.

A high-temperature aging treatment of a cell is effective in removing the passive-state film present on the surface of the hydrogen-absorbing alloy to thereby heighten the activity of the electrode. This effect is the same as in the treatment of a hydrogen-absorbing alloy with a high-temperature aqueous alkali solution before cell assembling. It should, however, be noted that in the invention, a charge-discharge cycle is conducted at least once before the aging treatment. By controlling the terminal voltage during this charge-discharge cycle, the potential of the alloy negative electrode can be regulated to a value less noble than the potentials at which the alloy undergoes a corrosion reaction. Thus, the surface film only is dissolved away during the aging treatment to corrode the alloy to a certain level to thereby activate the alloy. The potential control of the hydrogen-absorbing alloy negative electrode can be easily attained only when the alloy is incorporated into a cell and this cell is subjected to a charge-discharge operation.

The charge-discharge cycle is also effective in reducing the particle size of the hydrogen-absorbing alloy. When this size reduction occurs, the alloy particles come to have faces having no passive-state film. The appearance of such fresh faces accelerates the activation of the negative electrode. Because of this, a sufficient activating effect is obtained in the invention even when the treatment is conducted at a temperature lower than in techniques heretofore in use. Low treatment temperatures have advantages that a small energy amount suffices for the treatment and that adverse influences on cell components having insufficient resistance to high temperature, such as, e.g., the positive-electrode active material, separator, and electrode binder, can be minimized.

Conditions for the aging treatment desirably include a temperature of from 40 to 80°C and a period of from 3 to 48 hours. When the aging is conducted under such treatment conditions, the effect of the aging can be heightened.

It is desirable that before the hydrogen-absorbing alloy negative electrode for a nickel-hydrogen cell to which the invention is applied is incorporated into the cell, the negative electrode should not be subjected to any activation treatment heretofore in use. With respect to the positive electrode comprising nickel hydroxide as the main component, it is desirable to treat the electrode, before incorporation into the cell, by oxidation with an oxidizing agent in an aqueous alkali solution to thereby regulate the potential thereof to 0.2 V or higher based on an Hg/HgO electrode.

The open-circuit potential of a positive electrode reflects the oxidation number of the active material constituting the positive electrode. As long as the potential of the positive electrode is 0.2 V or higher based on an Hg/HgO electrode, the oxidation number of the cobalt contained in the surface layer is larger than 2 without fail and part of the nickel of the nickel hydroxide contained in the core layer is in an oxidized state. Consequently, it is desirable that the positive electrode before incorporation into a cell should be regulated so as to have an open-circuit potential of 0.2 V or higher based on an Hg/HgO electrode.

<Brief Description of the Drawings>

Fig. 1 is a graph showing the relationship between the combined oxidation number of a positive-electrode active material and the open-circuit potential of the positive electrode before charge.

Fig. 2 is a graph showing charge curves in the first charge for open test cells.

Fig. 3 is a graph showing the relationship between the alkali concentration of an oxidation treatment bath and the powder resistivity of a positive-electrode active material.

Fig. 4 is a presentation showing the results of determination of the amount of a negative-electrode corrosion product after aging by X-ray powder diffractometry (XRD).

Fig. 5 is a graph showing the capacities of cells according to the invention and a comparative cell in initial cycles.

Fig. 6 is a graph showing the discharge capacities of cells at a temperature of -20°C.

Fig. 7 is a graph showing the relationship between the temperature of an oxidation treatment bath and capacity restoration after standing for cell short-circuiting.

Fig. 8 is a graph showing the cycle performances of cells according to the invention and a comparative cell.

<Best Mode for Carrying Out the Invention>

In the invention, a nickel-hydrogen storage cell having a negative electrode employing a hydrogen-absorbing alloy as an active material and a positive electrode having a positive-electrode active material comprising a core layer comprising, as the main component, nickel compounds including nickel oxyhydroxide and a surface layer covering the core layer and comprising as the main component a compound of cobalt having an oxidation number larger than 2 is assembled and subsequently subjected to a charge-discharge cycle at least once and then to an aging treatment.

The positive-electrode active material for the alkali storage cell according to the invention, for example, is composed of: a core layer comprising, as the main component, nickel hydroxide in which part of the nickel has been replaced by a Group 2A or 2B element of the periodic table and by cobalt; and a surface layer which covers the core layer. This surface layer comprises a cobalt-containing compound and may contain at least one rare earth element (hereinafter referred to as M; examples of M include yttrium (Y), erbium (Er), thulium (Tm), ytterbium (Yb), lutetium (Lu), and the like). In synthesizing the positive-electrode active material, the surface layer is subjected to an oxidation treatment with an oxidizing agent in an aqueous alkali solution to regulate the cobalt contained in the surface layer so as to have an oxidation number exceeding 2. It is desirable that this treatment be conducted so that the positive-electrode active material comes to have a potential of 0.2 V or higher based on an Hg/HgO electrode. As the oxidizing agent in the oxidation treatment step is used, for example, a peroxodisulfuric acid salt, hypochlorous acid salt, or chlorous acid salt. The alkali concentration in the oxidation treatment bath in the oxidation treatment step desirably is at least 8 mol/dm$^3$. The treatment is desirably conducted at a temperature of from 60°C to 120°C.

As stated above, the cell aging treatment is desirably conducted at a temperature of from 40 to 80°C for a period of from 3 to 48 hours.

The cobalt compound which is contained in the surface layer and in which the cobalt has been regulated so as to have an oxidation number larger than 2 forms a satisfactory conductive network among the positive-electrode active material particles. In the electrolytic oxidation by charging heretofore in use, cobalt compounds in which the cobalt has an oxidation number of 2 are less apt to undergo an oxidation reaction and less apt to form a conductive network. In the invention, an oxidation treatment is conducted in an aqueous alkali solution with an oxidizing agent.

According to the invention, the positive-electrode active material can be oxidized to any desired degree beforehand without conducting the formation of a conductive network after cell assembling as in related-art techniques. It is therefore possible to control the decrease in discharge reserve amount. As a result, it is possible to increase the capacity of cells. The oxidation treatment establishes a satisfactory conductive network among the positive-electrode active material particles. Addition of an additive for imparting conductivity to the positive electrode is hence unnecessary. Consequently, an apparatus for mixing a conductive material can be omitted and a cell production process can be simplified. Furthermore, since the complicated multistage chemical step for forming a conductive network after cell assembling is unnecessary in the invention, not only the apparatus for this step can be omitted to simplify the cell production process but also cell productivity can be improved.

As the oxidizing agent for the oxidation treatment, any of potassium persulfate ($K_2S_2O_8$), sodium persulfate ($Na_2S_2O_8$), ammonium persulfate {$(NH_4)_2S_2O_8$}, potassium hypochlorite (KClO), sodium hypochlorite (NaClO), sodium chlorite ($NaClO_2$), and the like may be used to produce the same effect. However, $(NH_4)_2S_2O_8$ is unsuitable for actual production because it yields ammonia, which emits an irritant odor, as a by-product during the oxidation treatment. From the standpoints of handleability, low cost, etc., $K_2S_2O_8$, $Na_2S_2O_8$, NaClO, $MaClO_2$, and the like are desirable.

The alkali concentration in the oxidation treatment bath is desirable 8 mol/dm$^3$ or higher. By regulating the oxidation treatment bath so as to have an alkali concentration of 8 mol/$dm^3$ or higher, the efficiency of oxidation can be heightened as will be described later.

The temperature of the bath during the oxidation treatment is desirably from 60 to 120°C. By keeping the temperature of the bath within this range, the oxidation of the compound of cobalt having an oxidation number of 2 is accelerated as will be described later, and a conductive network of cobalt oxyhydroxide is formed. Thus, the effect of accelerating the restoration of cell performance after long-term standing of the cell at a low voltage (discharge state) is produced.

The nickel hydroxide as the main component of the core layer in the positive-electrode active material according to the invention desirably is high-density nickel hydroxide. By employing high-density nickel hydroxide, a high energy density can be attained. It is further desirable that part of the nickel in the nickel hydroxide should have been replaced by one or more elements selected from the Groups 2A and 2B of the periodic table, such as zinc, magnesium, and calcium, and by cobalt. As is generally known, this replacement greatly improves the suitability for charge, high-rate discharge performance, and cycle performance of the positive electrode. Especially when this is applied to high-density nickel hydroxide (containing zinc in a solid solution state and having a pore volume of ≤0.05 $cm^3$/g and pore diameter of ≤30 Å (3 nm); disclosed in Japanese Patent Publication No. 77129/1995 and U.S. Reissued Patent 34,752), a positive-electrode active material having a high capacity and excellent cycle performance is obtained.

Values of the oxidation number of the positive-electrode active material are determined by the ferrous sulfate method. Specifically, the amount of active oxygen contained in an active-material powder is determined first in the following manner. A 0.1 g portion of the sample powder and 1 g of ammonium ferrous sulfate are weighed out and added to an aqueous acetic acid solution having a concentration of 20 vol% and a temperature regulated to 5°C. The resultant mixture is stirred for 3 to 10 hours to completely dissolve the sample. Thereafter, this solution is titrated with 0.02 mol/$dm^3$ (0.1 gram equivalent per $dm^3$) potassium permanganate solution. The amount of active oxygen is determined using the following equation (1).

$$\text{Amount of active oxygen (mg/100-mg sample)} = 8\times\left(\frac{XFe}{392.14} - \frac{0.1\times f\times V}{1000}\right)\times\left(\frac{100}{Xsp}\right) \quad (1)$$

In equation (1), XFe is the amount (g) of the ammonium ferrous sulfate weighed; V is the amount (ml) of the potassium permanganate solution used for titration; f is a correction coefficient for the potassium permanganate solution; and Xsp is the amount (g) of the sample powder weighed.

Subsequently, the amount of nickel contained in the sample powder (mg/100-mg sample) and the amount of cobalt contained therein (mg/100-mg sample) are determined by inductively coupled high-frequency plasma (ICP) emission spectrometry, atomic absorption spectrophotometry, or another technique. The combined oxidation number of the nickel and cobalt contained in the sample powder is calculated using the following equation (2).

$$\text{Oxidation number} = \left\{1+\frac{\text{(active oxygen amount/16000)}}{\text{(nickel amount/58690) + (cobalt amount/58933.2)}}\right\}\times 2 \quad (2)$$

In equation (2), the unit of nickel amount and cobalt amount is mg.

The hydrogen-absorbing alloy in the invention is, for example, of the $AB_5$ type. An example thereof is $MmNi_{3.6}Co_{0.7}Al_{0.29}Mn_{0.36}$ (Mm represents a mischmetal, which comprises elements such as La, Ce, Pr, and Nd). In the invention, there is no need of activating the hydrogen-absorbing alloy before cell assembling. It is rather desirable not to conduct an activation treatment beforehand. In case where an activation treatment is conducted before the alloy is incorporated into a cell, there is the high possibility of leading to reduced cell performance because the alloy activated is apt to alter during storage.

<Examples>

Examples of the invention will be given below, but the invention should not be construed as being limited thereto.

(Synthesis of Nickel Hydroxide Particles)

The case where the element selected from the Group 2A or 2B of the periodic table is zinc will be described as an example. To 2 $dm^3$ of an aqueous solution containing 2.0 mol of nickel sulfate, 0.12 mol of zinc sulfate, and 0.05 mol of cobalt sulfate dissolved therein was added 1 $dm^3$ of an aqueous solution containing 1 mol of ammonium sulfate dissolved therein. Subsequently, an aqueous sodium hydroxide solution having a concentration of 40 wt% was added thereto and the pH of the resultant mixture was kept in the range of from 10 to 13 to yield an ammine complex. While the reaction system was then kept at a temperature of 40 to 50°C with vigorous agitation, an aqueous sodium hydroxide solution was added dropwise thereto to regulate the pH of the reaction system to 10.5 to 11.5. Agitation was further continued for about 12 hours. Thus, spherical high-density nickel hydroxide particles (average particle diameter, 10 μm; tap density, 2.1 $g/cm^3$) serving as a core layer were synthesized. The core layer had a composition comprising 90 wt% $Ni(OH)_2$, 2.4 wt% $Co(OH)_2$, and 6 wt% $Zn(OH)_2$. (The wt%'s are based on the weight of the sample analyzed. These are values in terms of hydroxide amount. There are cases where the sum does not become 100% because samples contain impurities including water.)

(Formation of Cobalt Hydroxide Surface Layer)

Into a reactor were introduced 100 g of the high-density nickel hydroxide particles and an appropriate amount of water. Thereto was added 30 $cm^3$ of an aqueous ammonium sulfate solution having a concentration of 2 $mol/dm^3$. An aqueous sodium hydroxide solution was further added to regulate the pH to 9 to 10. Subsequently, the temperature of the reaction bath was regulated to 40 to 50°C and 65 $cm^3$ of an aqueous cobalt sulfate solution having a concentration of 2 $mol/dm^3$ was gradually added thereto while vigorously agitating the reaction system. During this period, the pH of the reaction bath was kept in the range of from 12 to 12.5 by dropwise adding an aqueous caustic soda solution having a concentration of 40 wt%, and the temperature was kept in that range. The reaction mixture was allowed to stand for about 1 hour and then filtered. The solid was washed with water and dried. Thus, nickel hydroxide particles having a surface layer made of cobalt hydroxide on the surface thereof were obtained. The proportion of the surface layer to the whole particles was 7 wt%.

(Oxidation Treatment of Nickel Hydroxide Particles)

To 500 $cm^3$ (0.5 $dm^3$) of 30 wt% (about 10 $mol/dm^3$) aqueous sodium hydroxide solution having a liquid temperature of 110°C was added 50 g of the nickel hydroxide particles having a surface layer made of cobalt hydroxide. This mixture was sufficiently stirred. Subsequently, 20 g of a $K_2S_2O_8$ powder was added thereto and the resultant mixture was stirred for 3 hours while maintaining that temperature. Thereafter, the particles were washed with water and dried. Thus, various nickel hydroxide-based particles were obtained.

(Production of Positive-Electrode Plate)

The active material particles were mixed with 0.5 wt% aqueous carboxymethyl cellulose (CMC) solution in a weight ratio of 80:20. Polytetrafluoroethylene was added thereto in an amount of 1 wt% to obtain a paste. This paste was charged into pores of a porous nickel object (commercial nickel foam substrate; thickness, 1.4 mm; basis weight, 450 $g/m^2$) and then dried at 80°C. Thereafter, the nickel object was pressed to a thickness of 0.8 mm to obtain a nickel positive-electrode plate.

(Production of Negative-Electrode Plate)

A hydrogen-absorbing alloy of the $AB_5$ rare-earth type having a maximum particle diameter of 75 μm and having a composition represented by $MmNi_{3.8}Co_{0.7}Al_{10.3}Mn_{0.2}$ (wherein Mm represents a mischmetal, which is a composite of rare earth elements including at least one element selected from La, Ce, Nd, and Pr) was mixed with 3 wt% nickel metal powder based on the hydrogen-absorbing alloy. Thereto was added 1 wt% polytetrafluoroethylene as a binder. Furthermore, a 1 wt% aqueous solution of methyl cellulose was added thereto in an amount of 15 wt% to prepare a paste. This paste was applied to each side of a perforated steel metal sheet (commercial perforated sheet; thickness 60 μm; rate of hole area, about 45%) and dried. Thereafter, the metal sheet was pressed to a thickness of 0.45 mm to obtain a negative-electrode plate as a counter electrode.

(Examination of Relationship between Potential and Oxidation Number of Positive Electrode)

The negative-electrode plate was used in combination with a separator and the nickel positive-electrode plate to fabricate open test cells using an aqueous potassium hydroxide solution having a specific gravity of 1.28 as an electrolyte. To the open cells was connected an Hg/HgO electrode as a standard electrode for measuring the electrode potential.

(Determination of Oxidation Number of Positive-Electrode Active Material Particles)

The oxidation number of the positive-electrode active material synthesized was determined by the ferrous sulfate method. The results are shown in Fig. 1. Oxidation number is calculated from the amount of active oxygen in the particles. In the case of the active material particles synthesized above, however, since the material contains two transition metal elements, i.e., nickel and cobalt, a value obtained by combining the oxidation numbers of the two elements was used (combined oxidation number).

The oxidation-reduction potentials of Co(II)/Co(III) and Ni(II)/Ni(III) are as shown by schemes (3) and (4).

$$Co(OH)_2 + OH^- \rightarrow CoOOH + H_2O + e^- \quad (3)$$

$$E = -54 \text{ mV (vs. Hg/HgO)}$$

$$Ni(OH)_2 + OH^- \rightarrow NiOOH + H_2O + e^- \quad (4)$$

$$E = +490 \text{ mV (vs. Hg/HgO)}$$

The two elements have a large difference in oxidation-reduction potential. Because of this, when Co(II) coexists with Ni(II), then the Co(II), which has a less noble oxidation potential, is preferentially oxidized and the Ni(II) is then oxidized.

The open-circuit potentials of positive electrodes having various oxidation numbers based on an Hg/HgO electrode before charge are shown in Fig. 1. In the range in which the combined oxidation number is not larger than 2.08, the cobalt in the surface layer is mainly oxidized and the nickel remains in the bivalent state {Ni(II)}. Consequently, the potential of the positive electrode is not higher than 0 mV (vs. Hg/HgO) As the combined oxidation number of the positive-electrode active material increases, the oxidation of the cobalt compound in the surface layer is completed and the oxidation of the nickel hydroxide successively begins, whereby the electrode potential increases.

(First Charge)

First-charge curves for the open cells are shown in Fig. 2. When a cell employing a positive electrode which has not undergone an oxidation treatment by charge and has a combined oxidation number of 2.02 is charged, it gives a curve which has a plateau where the potential is 200 mV (vs. Hg/HgO) until the charge exceeds 6% and has a second plateau with a potential of 500 mV after the charge amount further increases thereafter. The plateau with a potential of 200 mV corresponds to the oxidation reaction Co(II) → Co(III), while the plateau with a potential of 500 mV corresponds to the oxidation reaction Ni(II) → Ni(III).

In order to conduct the oxidation treatment so as to cause the oxidation reaction Co(II) → Co(III) to proceed, it is desirable to cause an excess oxidizing agent to act on the cobalt. When the treatment is thus performed, the oxidation reaction of the Ni(II) contained in the core layer to Ni(III) occurs. As the amount of the oxidizing agent to be caused to act increases, Ni(III) is yielded in a larger amount. When the proportion of Ni(III) to all nickel exceeds 25%, there is the possibility that an abrupt oxidation reaction might occur locally to yield γ-NiOOH, which is a low-density substance having a higher oxidation number than Ni(III). This γ-NiOOH not only lowers the packing density of the active material, but also shows poor reversibility in oxidation-reduction reactions to cause a decrease in charge-discharge cycle performance. Consequently, it is desirable that the oxidation treatment should be conducted to such a degree that the proportion of Ni(III) to all nickel does not exceed 25%.

(Relationship between Alkali Concentration of Oxidation Treatment Bath and Combined Oxidation Number)

Fifty grams of particles formed by coating the surface of a core layer comprising 90% $Ni(OH)_2$, 2.4% $Co(OH)_2$, and 6% $Zn(OH)_2$ with 7% $Co(OH)_2$ were added to 200 ml of each of aqueous sodium hydroxide solutions respectively having concentrations of 1, 4, 8, 10, and 12 mol/dm$^3$ and each having a temperature of 110°C. After each resultant mixture was sufficiently stirred, a $K_2S_2O_8$ powder was added thereto to obtain active material particles in which the cobalt contained in the surface layer and part of the nickel contained in the core layer had been oxidized.

In this treatment, it was attempted to oxidize all the cobalt contained in the surface layer and 25% of the nickel contained in the core layer. The progress of oxidation depends on the kind of the oxidizing agent used. However, it is possible to synthesize an active material having a desired oxidation number by regulating the proportion of the oxidizing agent added to the nickel hydroxide material. The results of determination of the oxidation numbers of the samples are shown in Table 1.

Table 1

| Alkali concentration (normality, N) | Combined oxidation number |
|---|---|
| 1 | 2.21 |
| 4 | 2.22 |
| 8 | 2.22 |
| 10 | 2.21 |
| 12 | 2.22 |

(Examination of Electrical Resistance of Positive-Electrode Active Material Particles)

The active material particles produced were examined for resistivity. Sample powders each were placed in an electrically insulating tableting vessel and examined for conductivity with pressing at 20 kgf. The results are shown in Fig. 3. Fig. 3 shows that when the alkali concentration in the oxidizing treatment bath is low, the particles synthesized have an exceedingly high resistivity. Even in the case of the samples shown in Table 1, which have the same oxidation number of a predetermined value, the conductivities of the particles synthesized are considerably influenced by the alkali concentration of the oxidation treatment bath.

This may be because even a compound of cobalt having the same oxidation number is treated, use of an oxidation bath having a low alkali concentration disadvantageously yields highly crystalline $CoHO_2$, which has poor conductivity. As stated above, the discharge efficiency of a cell greatly depends on the conductivity of the active materials. Consequently, for obtaining a positive-electrode active material having high conductivity, it is desirable to regulate the oxidation treatment bath so as to have a high alkali concentration.

(Production of Sealed Cell for Performance Evaluation)

Fifty grams of particles formed by coating the surface of a core layer comprising 90% $Ni(OH)_2$, 2.4% $Co(OH)_2$, and 6% $Zn(OH)_2$ with 7% $Co(OH)_2$ were added to 200 ml of an aqueous caustic soda solution having a concentration of 10 mol/dm$^3$ and a temperature of 110°C. After the resultant mixture was sufficiently stirred, a $K_2S_2O_8$ powder was added thereto to obtain active material particles having a combined oxidation number of 2.22. This active material was mixed with 0.5 wt% aqueous carboxymethyl cellulose (CMC) solution in a weight ratio of 80:20. Polytetrafluoroethylene was added thereto in an amount of 1 wt% to obtain a paste. This paste was charged into pores of a porous current collector made of the nickel foam described above. The paste charged was dried. The amount of the paste charged was 0.25 g/cm$^3$ and 7.5 g/cell. Thereafter, the collector was pressed to a thickness of 0.8 mm to obtain a positive-electrode plate.

A negative-electrode plate was produced in the same manner as described above. Namely, a hydrogen-absorbing alloy having a maximum particle diameter of 75 μm and a composition represented by $MmNi_{3.8}Co_{0.7}Al_{10.3}Mn_{0.2}$ was mixed with a nickel metal powder. Thereto was added 1 wt% polytetrafluoroethylene as a binder. A 1 wt% aqueous solution of methyl cellulose was added thereto in an amount of 15 wt% to prepare a paste. This paste was applied to each side of the perforated steel metal sheet described above in an amount of 0.23 g/cm$^2$ and dried. Thereafter, the metal sheet was pressed to a thickness of 0.45 mm to obtain a negative-electrode plate.

The positive-electrode plate was used in combination with the negative-electrode plate having the capacity 1.6 times the capacity of the positive-electrode plate. These electrode plates were spirally wound through a separator made of a hydrophilized polypropylene nonwoven fabric to obtain a group of coiled electrode plates. This electrode plate group was inserted into a metallic cell can. Thereafter, an electrolyte comprising an aqueous potassium hydroxide solution having a specific gravity of 1.29 as the main component was charged thereinto in an amount of 2.45 g/cell. Thus, sealed nickel-hydrogen cells of the AA size (height, 50 mm; diameter, 14.5 mm) were produced which had a nominal capacity of 1,450 mAh.

(First Charge-Discharge)

The cells described above were subjected to a charge-discharge test under the following conditions. The test temperature was 20°C. First charge was conducted at 1/50 ItA for 12 hours and subsequently at 1/10 ItA for 10 hours. Thereafter, the cells were discharged at 1/4 ItA until the terminal voltage reached 1.0 V.

(Aging)

The cells which had undergone the first charge-discharge (cells after the discharge) were aged at temperatures of 20, 40, 60, 80, and 100°C respectively for periods of 1, 3, 5, 10, 20, 40, and 60 hours. For the purpose of comparison, those cells were compared in properties with a cell which had been fabricated without conducting the first charge and had under one aging alone and with a cell which had not undergone aging after the first charge-discharge operation. In cycle performance evaluations, each cell was charged at a current of 0.5 ItA to 115% and discharged at a current of 0.5 ItA to a final voltage of 1.0 V. Charge and discharge were repeated under these conditions.

Corrosion means an operation in which the passive-state film on the surface is removed and, simultaneously therewith, elements contained in the alloy and dissolving in the electrolyte (e.g., rare earth elements, Mn, Al, and Co) are dissolved away to form on the surface a layer rich in nickel metal. As stated above, a certain level of corrosion is necessary for activation. This corrosion level corresponds to the level attained by the aging at temperatures of from 40 to 80°C.

At the time when four charge-discharge cycles had ended, cells were disassembled to take out the negative electrodes to determine the amount of $Mm(OH)_3$, which is a corrosion product, by XRD. The results are shown in Fig. 4, which shows the following. As the aging temperature rises, the time period required for the corrosion product amount to reach saturation becomes short. On -the other hand, in the case of standing at 20°C, the time period required for the corrosion product amount to reach saturation is long and the saturation amount is small. In the case of aging at 60°C, for example, the time period required for the corrosion product amount to reach saturation is 20 hours.

The cells described above were subjected to a charge-discharge cycle test at a temperature of 20°C. The test results are shown in Fig. 5. Discharge capacity is shown in terms of proportion to the design capacity value. The standing periods used were the periods required for the corrosion product amount to reach saturation, which were determined from Fig. 4. As the aging temperature rises, the number of cycles required for the discharge capacity to become stable decreases. Usually, in the case of cells which have not undergone aging, several charge-discharge cycles are necessary before the capacity becomes stable. In contrast, in the case of the cells according to the invention, the number of charge-discharge cycles necessary for charge capacity stabilization can be reduced. As described above, the rate of activation of hydrogen-absorbing alloys correlates with the amount of a corrosion product. The results further show that in the cell which has undergone no charge-discharge before aging, it is necessary to repeatedly conduct charge-discharge at least about 10 times before the discharge capacity becomes stable.

Fig. 6 is a presentation showing the results of a low-temperature discharge test of the sealed nickel-hydrogen cells of the AA size at a temperature of -20°C. Discharge capacity is likewise shown in terms of proportion to the design capacity. The standing periods used were the periods required for the negative-electrode corrosion product concentration to reach saturation, which were determined from Fig. 4. The test was conducted in the fourth cycle and tenth cycle counted from the first charge (including the first charge). Charge was conducted at a temperature of 20°C and a current of 0.5 ItA to 115%. Discharge was conducted at a temperature of -20°C and a current of 1 ItA to a final discharge voltage of 1 V.

As the aging temperature rises, the cell comes to show satisfactory discharge performance even in initial charge-discharge cycles. Furthermore, when charge-discharge is conducted once before aging, better discharge performance is obtained. This may be because the charge-discharge operation conducted once and the high-temperature standing accelerated the activation of the alloy. When the aging temperature was 20°C, no improvement in low-temperature discharge performance was observed. When the aging temperature was 40°C or higher, the discharge capacity obtained was not less than 40% based on the nominal capacity. It is therefore desirable that the aging temperature should be 40°C or higher.

It was further found that when the aging period is shorter than 1 hour, the aging does not produce a sufficient effect. On the other hand, even when aging is conducted for 80 hours or longer, a further significant improvement in low-temperature discharge performance is not observed. When aging was conducted for a period exceeding 80 hours in a range of temperatures higher than 60°C, a decrease in discharge capacity was observed in ordinary-temperature discharge. This is thought to be attributable to damage to the positive electrode. It is desirable from these that the aging period should be from 3 to 80 hours.

(Influence of Oxidation Treatment Bath Temperature)

A nickel hydroxide material was treated here for the purpose of examining the influence of the temperature of an oxidation treatment bath for the material. According to the method described above, the oxidation treatment of positive-electrode active material particles was conducted at five oxidation treatment bath temperatures, i.e., 30, 50, 70, 90, and 110°C, with the target combined oxidation number being 2.20.

Positive electrodes to which the positive-electrode active materials treated at the four temperatures had been applied each were combined with a negative electrode having a capacity 1.70 times the capacity of these positive electrodes to produce sealed nickel-hydrogen cells of the AA size having a capacity of 1,450 mAh. These cells were charged at 1/50 ItA for 12 hours and subsequently charged at 1/10 ItA for 10 hours. The cells were discharged at 0.2 ItA to 1.0 V and then aged at a temperature of 60°C for 48 hours. After the aging, an operation consisting of 1/10 ItA charge and 2/10 ItA discharge was repeatedly conducted five times. It was ascertained that the nominal capacity was attained. Subsequently, a resistor of 4 Ω was connected to the cells, which were allowed to stand (discharged) at a temperature of 60°C for 36 hours. After the standing, the cells were charged at 1/10 ItA and discharged at 2/10 ItA at a temperature of 20°C to examine capacity restoration after the standing.

The results of the test are shown in Fig. 7. It can be seen that when the oxidation treatment bath temperature is 90°C or higher, excellent capacity restoration after the standing is attained. This may be because when such a high oxidation treatment bath temperature was used, the durability of the conductive network constituted of the cobalt compound in the surface layer of the nickel hydroxide-based particles was improved and the conductive network suffered no damage by the standing. Consequently, the temperature of the oxidation treatment bath is desirably at least 70°C, preferably 90°C or higher. On the other hand, there is no particular upper limit on the temperature of the oxidation treatment bath. However, from the standpoint of safety of the oxidation treatment, the upper limit thereof is desirably not higher than the boiling point of the treatment bath used.

Sealed nickel-hydrogen cells of the AA size having a capacity of 1,450 mAh were produced in the same manner as described above. In this examination, a positive-electrode active material having a combined oxidation number x regulated to 2.28 by the method described above was applied to cells of Examples according to the invention, while an active material which was nickel hydroxide containing zinc and cobalt in solid solution state and coated with β-$Co(OH)_2$ and which had not undergone an oxidation treatment was applied to a cell of Comparative Example. The positive-electrode active material for the Comparative Example had a combined oxidation number of 2.02. These positive electrodes- were combined with negative electrodes respectively having capacities 1.65, 1.60, and 1.55 times the capacity of each positive electrode to produce sealed cells.

The cells were charged at 1/50 ItA for 12 hours and subsequently further charged at 1/10 ItA for 10 hours. The cells were discharged at 0.2 ItA to 1.0 V and then aged at a temperature of 80°C for 18 hours. Thereafter, a charge-discharge cycle test consisting of repetitions of 1 ItA charge and 1 ItA discharge was conducted. The results are shown in Fig. 8. The cells employing the active material which had undergone an oxidation treatment according to the invention are superior in cycle performance to the comparative cell. The cells which had ended their lives had an increased internal impedance and, hence, had impaired discharge performance. As shown in Fig. 8, when the active material which has undergone an oxidation treatment according to the invention is used, the negative-electrode capacity (reserve amount) which is excess as compared with the positive-electrode capacity can be reduced without exerting an adverse influence on the cell life. Because of this, excessive negative-electrode packing is unnecessary and an even higher capacity can be attained.

While the invention has been described in detail and with reference to specific embodiments thereof, it will be apparent to one skilled in the art that various changes and modifications can be made therein without departing from the spirit and scope thereof.

This application is based on a Japanese patent application filed on March 5, 2001 (Application No. 2001-059638), the entire contents thereof being hereby incorporated by reference.

<Industrial Applicability>

As described above, according to claim 1 of the invention, a nickel-hydrogen cell (nickel metal hydride cell) can be provided which has an increased capacity attained by reducing the initial generation of a negative-electrode discharge reserve to thereby reduce the negative-electrode packing volume and increase the positive-electrode packing volume and which is excellent in high-rate discharge performance, charge-discharge cycle performance, and capacity restoration after standing. According to claim 2, the invention has the effect of diminishing the corrosion of the negative-electrode hydrogen-absorbing alloy and accelerating cell activation. According to claim 3, the invention has the effect of realizing a positive electrode having enhanced conductivity and a high coefficient of use of the active material to thereby increase the cell capacity. According to claims 4 and 5, the effect of claim 3 can be further heightened.

## Claims

1. A process for producing a nickel-hydrogen cell, **characterized by** assembling a nickel-hydrogen storage cell having a positive-electrode active material comprising a core layer comprising, as the main component, nickel compounds including nickel oxyhydroxide and a surface layer covering the core layer and comprising as the main component a compound of cobalt having an oxidation number larger than 2, subsequently conducting a charge-discharge cycle at least once, and then aging the assembly.

2. The process for producing a nickel-hydrogen cell of claim 1, **characterized in that** the aging is conducted at a temperature of from 40 to 80°C for a period of from 3 to 48 hours.

3. The process for producing a nickel-hydrogen cell of claim 1, **characterized in that** the positive-electrode active material is one which has been treated by oxidation with an oxidizing agent in an aqueous alkali solution, and that the oxidizing agent is a peroxodisulfuric acid salt, a hypochlorous acid salt, or a chlorous acid salt, the aqueous alkali solution used for the oxidation treatment has an alkali concentration of 8 mol/$dm^3$ or higher, and the treatment is conducted at a temperature of 60°C or higher.

4. The process for producing a nickel-hydrogen cell of claim 3, **characterized in that** the positive-electrode active material is regulated, through the oxidation treatment, so as to have a potential of 0.2 V or higher based on an Hg/HgO electrode prior to the cell assembling.

5. The process for producing a nickel-hydrogen cell of claim 3, **characterized in that** in the oxidation treatment of the positive-electrode active material, from 4 to 25% of the nickel contained in the positive-electrode active material is oxidized.

FIG. 1

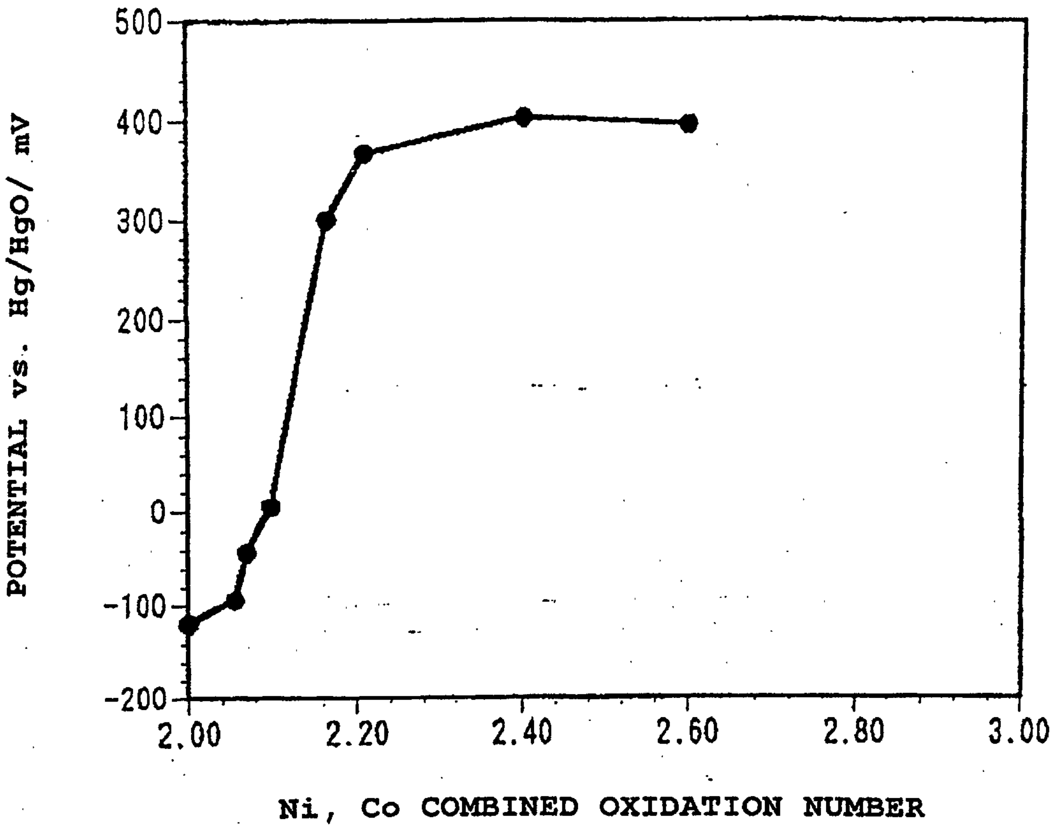
500
400
300
200
100
0
-100
-200
POTENTIAL vs. Hg/HgO/ mV
2.00
2.20
2.40
2.60
2.80
3.00
Ni, Co COMBINED OXIDATION NUMBER

FIG. 2

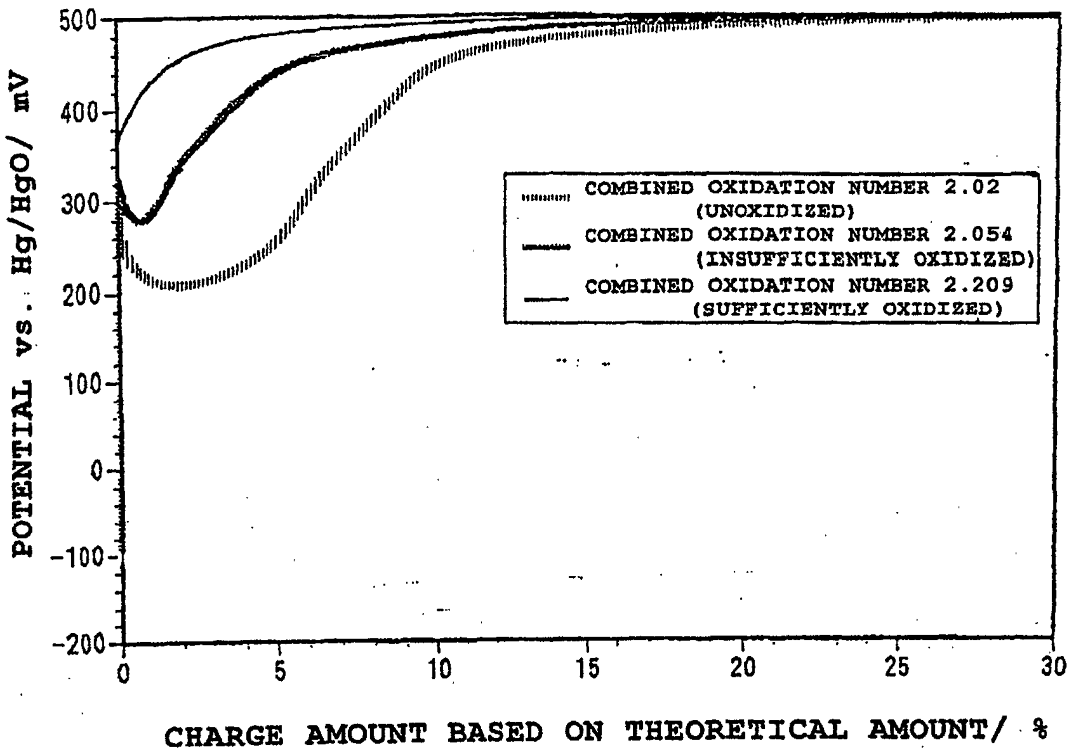
500
400
300
200
100
0
-100
-200
0
5
10
15
20
25
30
POTENTIAL vs. Hg/HgO/ mV
CHARGE AMOUNT BASED ON THEORETICAL AMOUNT/ %
COMBINED OXIDATION NUMBER 2.02
(UNOXIDIZED)
COMBINED OXIDATION NUMBER 2.054
(INSUFFICIENTLY OXIDIZED)
COMBINED OXIDATION NUMBER 2.209
(SUFFICIENTLY OXIDIZED)

FIG. 3

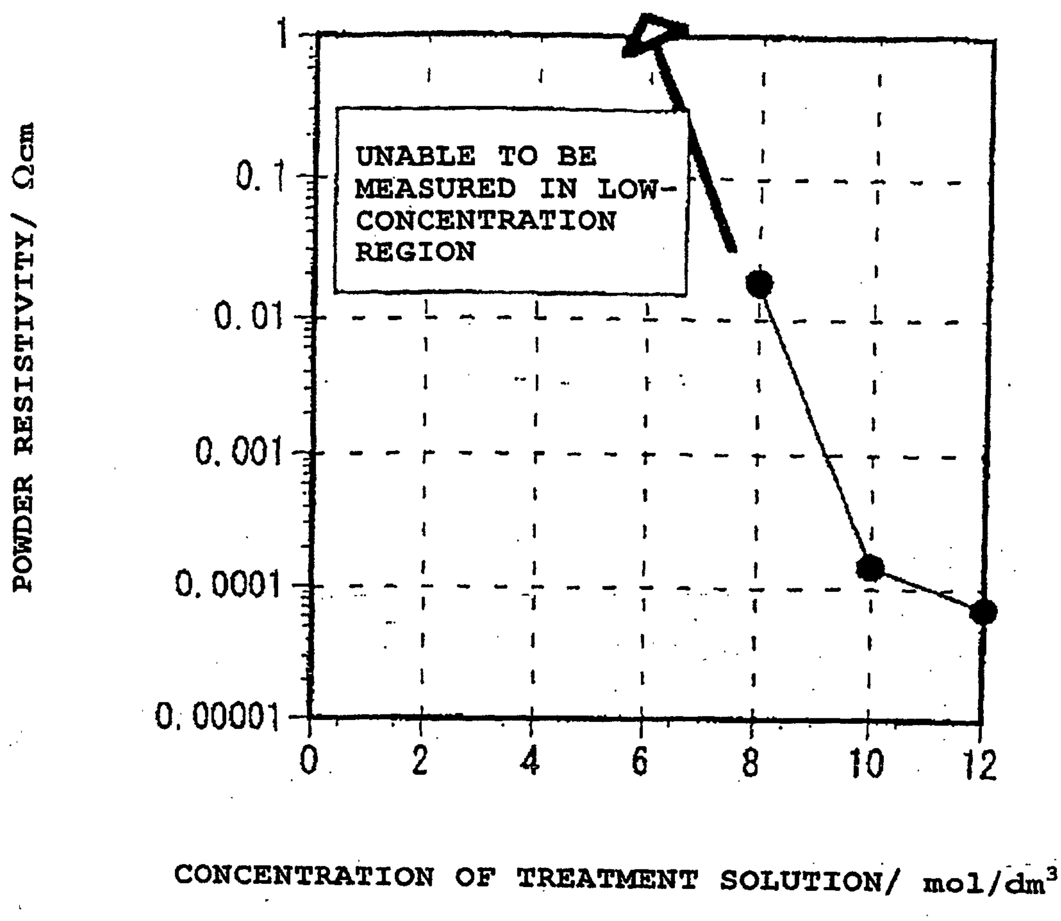
POWDER RESISTIVITY/ Ωcm
1
0.1
0.01
0.001
0.0001
0.00001
UNABLE TO BE MEASURED IN LOW-CONCENTRATION REGION
0
2
4
6
8
10
12
CONCENTRATION OF TREATMENT SOLUTION/ mol/dm3

FIG. 4

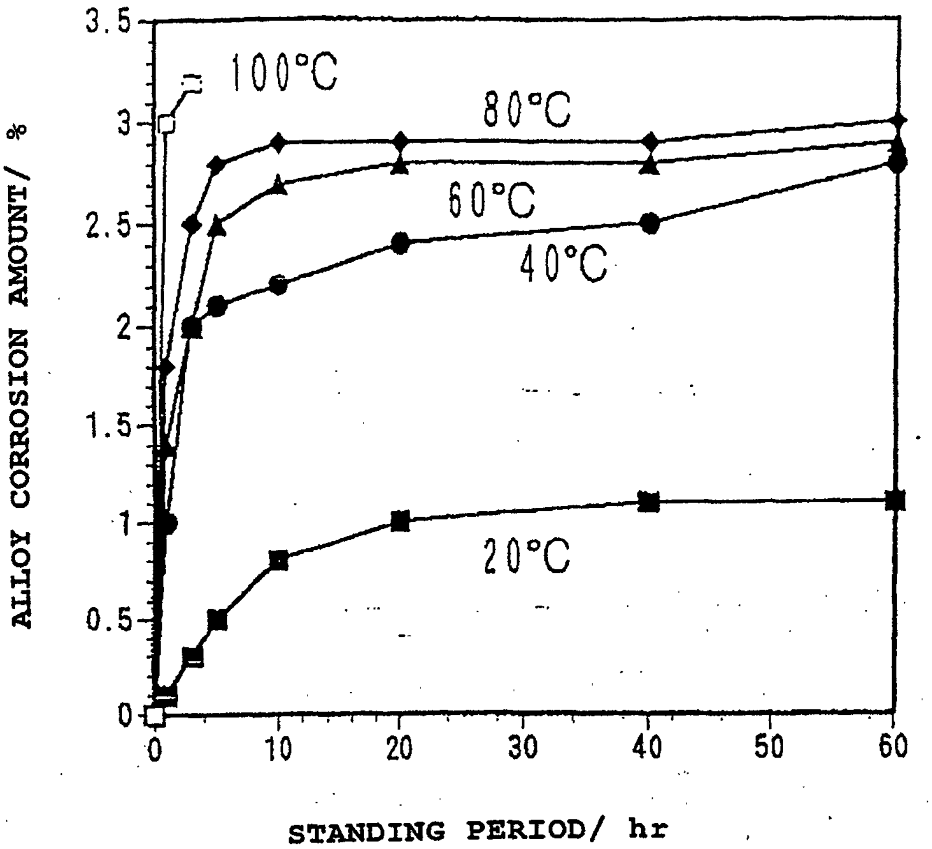
3.5
3
2.5
2
1.5
1
0.5
0
0
10
20
30
40
50
60
100°C
80°C
60°C
40°C
20°C
ALLOY CORROSION AMOUNT/ %
STANDING PERIOD/ hr

FIG. 5

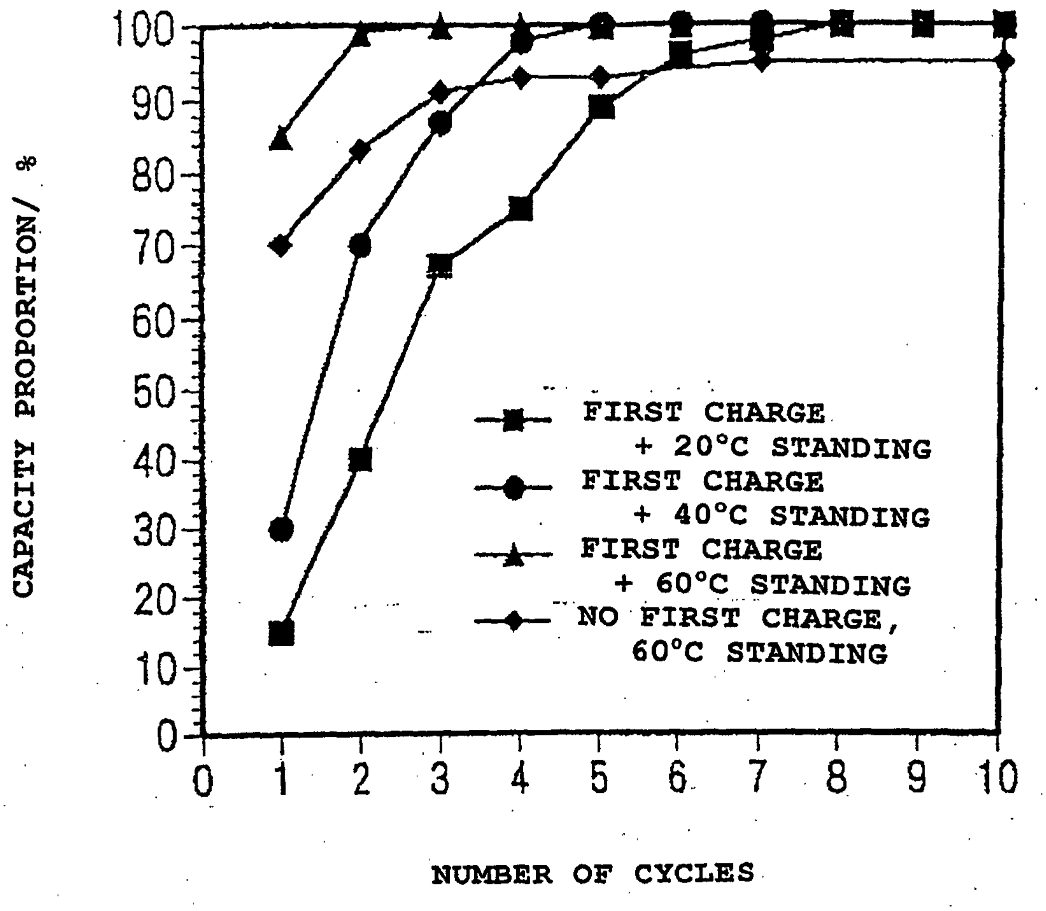
100
90
80
70
60
50
40
30
20
10
0
CAPACITY PROPORTION/ %
0
1
2
3
4
5
6
7
8
9
10
NUMBER OF CYCLES
FIRST CHARGE + 20°C STANDING
FIRST CHARGE + 40°C STANDING
FIRST CHARGE + 60°C STANDING
NO FIRST CHARGE, 60°C STANDING

FIG. 6

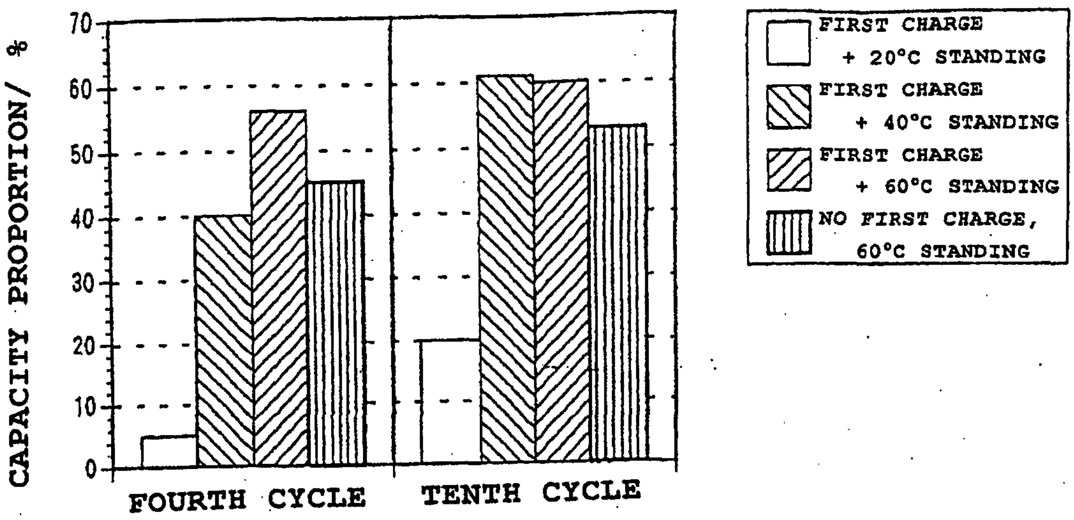
CAPACITY PROPORTION/ %
0
10
20
30
40
50
60
70
FOURTH CYCLE
TENTH CYCLE
FIRST CHARGE + 20°C STANDING
FIRST CHARGE + 40°C STANDING
FIRST CHARGE + 60°C STANDING
NO FIRST CHARGE, 60°C STANDING

FIG. 7

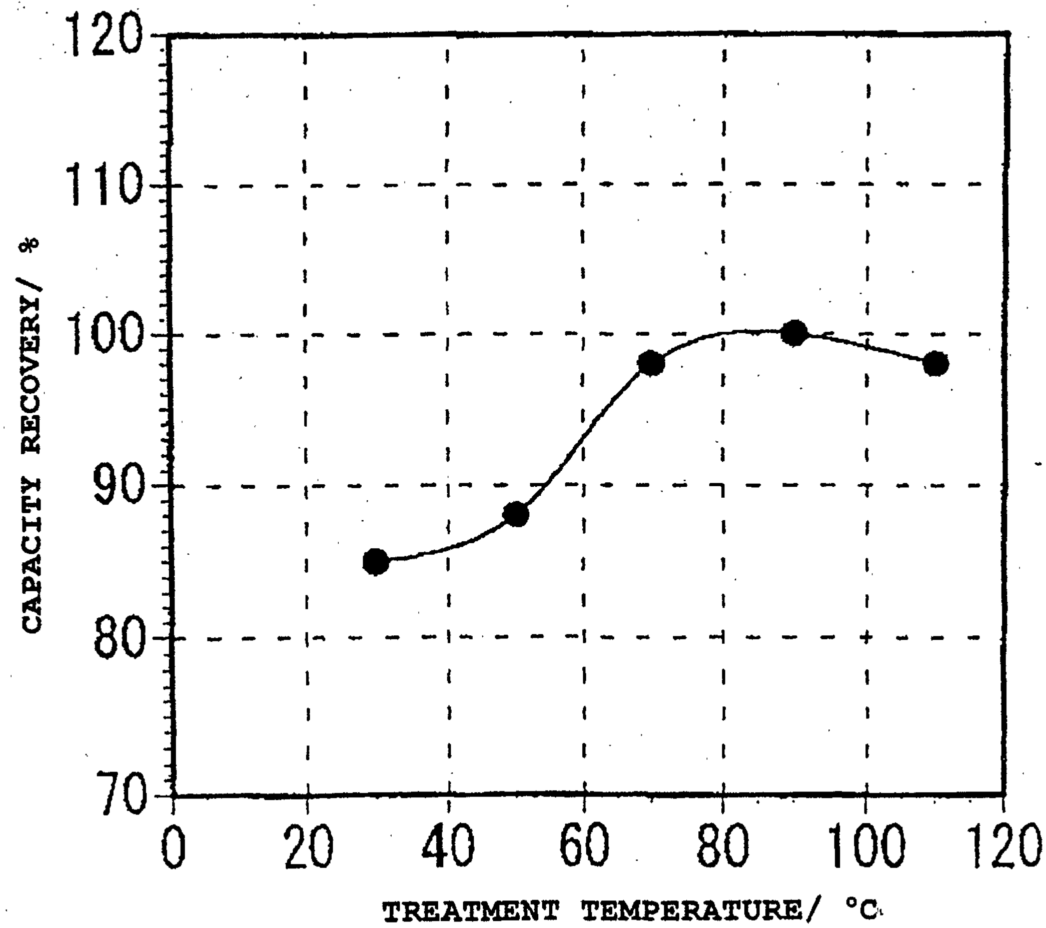
CAPACITY RECOVERY/ %
70
80
90
100
110
120
0
20
40
60
80
100
120
TREATMENT TEMPERATURE/ °C

FIG. 8

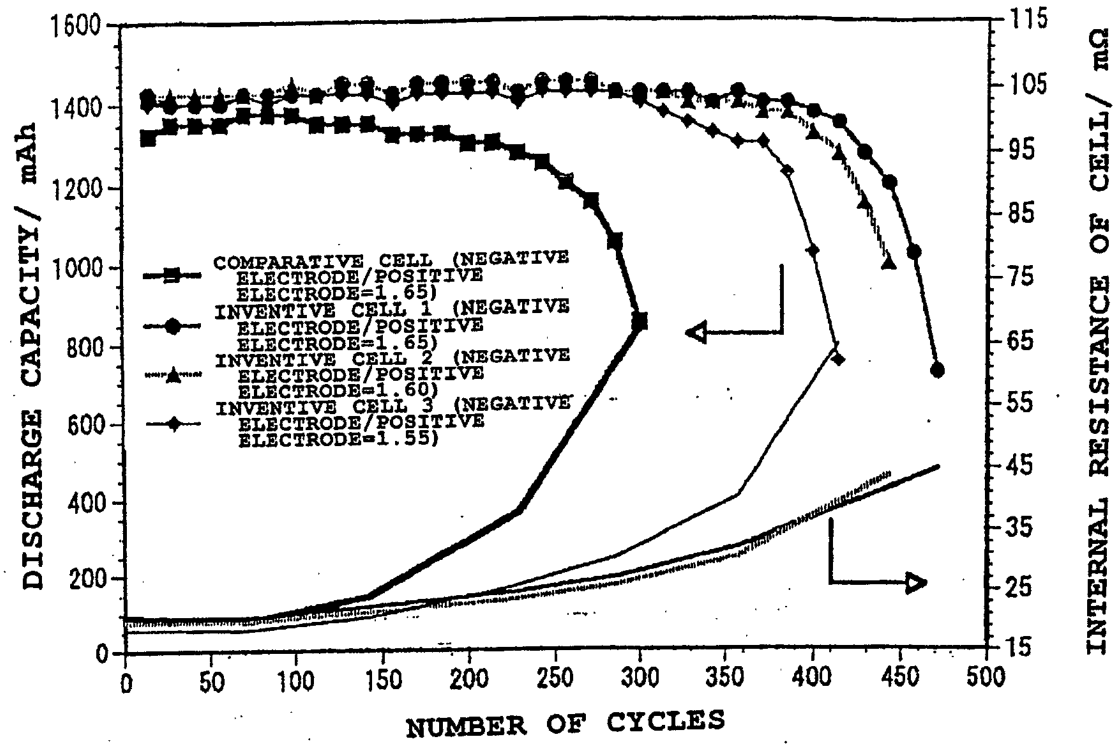

1600
1400
1200
1000
800
600
400
200
0
DISCHARGE CAPACITY/ mAh
115
105
95
85
75
65
55
45
35
25
15
INTERNAL RESISTANCE OF CELL/ mΩ
0
50
100
150
200
250
300
350
400
450
500
NUMBER OF CYCLES
COMPARATIVE CELL (NEGATIVE ELECTRODE/POSITIVE ELECTRODE=1.65)
INVENTIVE CELL 1 (NEGATIVE ELECTRODE/POSITIVE ELECTRODE=1.65)
INVENTIVE CELL 2 (NEGATIVE ELECTRODE/POSITIVE ELECTRODE=1.60)
INVENTIVE CELL 3 (NEGATIVE ELECTRODE/POSITIVE ELECTRODE=1.55)

## INTERNATIONAL SEARCH REPORT

International application No.
PCT/JP02/01948

A. CLASSIFICATION OF SUBJECT MATTER
Int.Cl[7] H01M10/30, H01M4/52

According to International Patent Classification (IPC) or to both national classification and IPC

B. FIELDS SEARCHED

Minimum documentation searched (classification system followed by classification symbols)
Int.Cl[7] H01M10/30, H01M4/52

Documentation searched other than minimum documentation to the extent that such documents are included in the fields searched

| | | | |
|---|---|---|---|
| Jitsuyo Shinan Koho | 1926-1996 | Toroku Jitsuyo Shinan Koho | 1994-2002 |
| Kokai Jitsuyo Shinan Koho | 1971-2002 | Jitsuyo Shinan Toroku Koho | 1996-2002 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| P,X | JP 2001-338645 A (Matsushita Electric Industrial Co., Ltd.), 07 December, 2001 (07.12.01), Claims; Par. Nos. [0022] to [0029], [0041] to [0050], [0058] to [0059] (Family: none) | 1 |
| Y<br>A | JP 11-25968 A (Matsushita Electric Industrial Co., Ltd.), 29 January, 1999 (29.01.99), Par. Nos. [0028] to [0039] (Family: none) | 1-2<br>3-5 |
| Y<br>A | JP 11-219701 A (Sanyo Electric Co., Ltd.), 10 August, 1999 (10.08.99), Par. Nos. [0026] to [0027] (Family: none) | 1-2<br>3-5 |

[X] Further documents are listed in the continuation of Box C. [ ] See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>02 April, 2002 (02.04.02) | Date of mailing of the international search report<br>16 April, 2002 (16.04.02) |
| Name and mailing address of the ISA/<br>Japanese Patent Office | Authorized officer |
| Facsimile No. | Telephone No. |

Form PCT/ISA/210 (second sheet) (July 1998)

**INTERNATIONAL SEARCH REPORT**

International application No.
PCT/JP02/01948

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | FR 2778023 A (Japan Storage Battery Co., Ltd.),<br>29 October, 1999 (29.10.99),<br>Page 6, line 23 to page 8, line 3<br>& JP 2000-21401 A (GS Merukotekku K.K.),<br>21 January, 2000 (21.01.00),<br>Par. Nos. [0021] to [0023] | 1-2<br>3-5 |

Form PCT/ISA/210 (continuation of second sheet) (July 1998)